# EUROPÄISCHE PATENTANMELDUNG

(11) **EP 2 028 832 A1**
(43) Veröffentlichungstag der Anmeldung: **25.02.2009**
(21) Anmeldenummer: 07016531.1
(22) Anmeldetag: 23.08.2007
(51) Int. Cl.: H04M 3/493

(54) **Verfahren zur Herstellung einer Kommunikationsverbindung zwischen Teilnehmern eines Kommunikationssystems mit einer Vielzahl von Teilnehmereinrichtungen**

(71) Anmelder: Carpo Trading SA, 1196 Gland (CH)
(72) Erfinder: Urban, Michael, 1291 Commugny (CH)
(74) Vertreter: Brune, Axel

(57) **Zusammenfassung**

Die vorliegende Erfindung betrifft ein Verfahren zur Herstellung einer Kommunikationsverbindung zwischen Teilnehmern eines Kommunikationssystems (1) mit einer Vielzahl von Teilnehmereinrichtungen (10 - 16) in einem Kommunikationsnetz (2).

## Beschreibung

Die vorliegende Erfindung bezieht sich auf ein Verfahren zur Herstellung einer Kommunikationsverbindung zwischen Teilnehmern eines Kommunikationssystems mit einer Vielzahl von Teilnehmereinrichtungen, mindestens einem Kommunikationsnetz, mittels dessen eine Kommunikationsverbindung zwischen mindestens zwei Teilnehmereinrichtungen hergestellt wird, und mindestens einer zentralen Kontaktdatenbank, in der kontaktbezogene Daten der Teilnehmer abrufbar gespeichert sind.

In den aus dem Stand der Technik bekannten Kommunikationssystemen werden Daten und Sprachinformationen zwischen verschiedenen Teilnehmereinrichtungen der Benutzer übertragen. Beispiele für derartige Kommunikationssysteme sind zellulare Mobilfunknetze, verkabelte Telefonnetze (so genannte PSTN-Netze), das Internet oder auch Kombinationen von mehreren Arten von Kommunikationsnetzen untereinander.

Die typischen Kommunikationsgewohnheiten der Menschen haben in den vergangenen Jahren eine drastische Wandlung erfahren. Während bis vor etwa zehn bis fünfzehn Jahren Sprachtelefonate zwischen Teilnehmern eines Kommunikationssystems hauptsächlich über Festnetztelefonieverbindungen erfolgten, hat in den vergangenen Jahren die mobile Kommunikation in Mobilfunknetzen zunehmend an Bedeutung gewonnen. Zudem hat sich auch die Internet-Telefonie (Voice over IP-Telefonie, VoIP-Teiefonie) mehr und mehr durchgesetzt.

Durch den Wandel der Kommunikationsgewohnheiten der Menschen verfügen Nutzer der Kommunikationssysteme häufig über mehrere Teilnehmereinrichtungen, wie zum Beispiel Festnetztelefone, Mobiltelefone, VoIP-Telefone, Computer mit VoIP-Software oder dergleichen. Bei einer Vielzahl von Teilnehmereinrichtungen, die einem einzelnen Nutzer gegebenenfalls zur Verfügung stehen, ergibt sich häufig das Problem, dass die Nutzer von Kommunikationssystemen mehrere, jeweils einer spezifischen Teilnehmereinrichtung zugeordnete Rufnummern besitzen, unter denen sie auf der jeweiligen Teilnehmereinrichtung erreichbar sind.

Beispielsweise haben viele Nutzer eine Festnetzrufnummer, eine Mobilfunkrufnummer und - um die besonderen Vorteile der VoIP-Telefonie ausnutzen zu können - eine oder mehrere Internet-Rufnummern (VoIP-Rufnummern). Ferner besitzen viele Nutzer häufig eine oder mehrere Teilnehmereinrichtungen für private Zwecke und darüber hinaus eine oder mehrere Teilnehmereinrichtungen für berufliche oder geschäftliche Zwecke. Aus dem vorstehend Gesagten ergibt sich, dass die Teilnehmer eines Kommunikationssystems eine Vielzahl von Rufnummern ihrer Kommunikationspartner unmittelbar in Kontaktdatenspeichermitteln ihrer Teilnehmereinrichtungen und/oder Computer elektronisch gespeichert und/oder zum Beispiel handschriftlich in Adress- und Notizbüchern oder dergleichen hinterlegt haben.

Der Nachteil dieser Art der Kontaktdateninformationsverwaltung besteht darin, dass die gewünschte Rufnummer von Kommunikationspartnern häufig nicht in der gerade verfügbaren Teilnehmereinrichtung gespeichert ist, so dass auf diese Rufnummer nicht zugegriffen werden kann. Ferner ist eine Synchronisation mehrerer Teilnehmereinrichtungen eines Teilnehmers vergleichsweise aufwändig und zeitraubend. Außerdem ist die Anwahl eines anderen Teilnehmers des Kommunikationssystems nicht intuitiv.

Hier setzt die vorliegende Erfindung an.

Der vorliegenden Erfindung liegt die Aufgabe zugrunde, ein Verfahren der eingangs genannten Art zum Aufbau einer Kommunikationsverbindung zwischen Teilnehmern eines Kommunikationssystems zur Verfügung zu stellen, das den Kommunikationsaufbau sowie in einem weiteren Aspekt auch die Kontaktdatenverwaltung einfacher und damit benutzerfreundlicher gestaltet.

Diese Aufgabe wird durch ein Verfahren der eingangs genannten Art mit den Merkmalen des kennzeichnenden Teils des Anspruchs 1 sowie durch die übrigen unabhängigen Ansprüche gelöst. Die Unteransprüche betreffen vorteilhafte Weiterbildungen der Erfindung.

Das erfindungsgemäße Verfahren zeichnet sich gemäß Anspruch 1 dadurch aus, dass
- zumindest für einige Teilnehmer des Kommunikationssystems aus deren Namen eine Teilnehmeridentifikationskennung (TN-ID) erzeugt und in der zentralen Kontaktdatenbank gespeichert wird,
- zum Aufbau einer Kommunikationsverbindung von einem Benutzer eine Teilnehmeridentifikationskennung (EINGABE-TN-ID) eines Kommunikationspartners in die Teilnehmereinrichtung eingegeben und von der Teilnehmereinrichtung zur zentralen Kontaktdatenbank übertragen wird,
- durch eine Abfrage der zentralen Kontaktdatenbank überprüft wird, ob die vom Benutzer eingegebene und zur zentralen Kontaktdatenbank übertragene Teilnehmeridentifikationskennung (EINGABE-TN-ID) mindestens einer der in der zentralen Kontaktdatenbank gespeicherten Teilnehmeridentifikationskennungen (TN-ID) entspricht, wobei bei einem einzigen Abfragetreffer eine Kommunikationsverbindung zu einer Teilnehmereinrichtung des entsprechenden Kommunikationspartners des Kommunikationssystems aufgebaut wird, bei mehreren Abfragetreffern zumindest einige der den Abfragetreffern zugeordneten und in der zentralen Kontaktdatenbank gespeicherten Kontaktinformationen für eine Auswahl zur Teilnehmereinrichtung des Benutzers übertragen werden und bei keinem Abfragetreffer eine Mitteilung zur Teilnehmereinrichtung des Benutzers übertragen wird, dass die Abfrage der Kontaktdatenbank erfolglos war.

Gemäß der vorliegenden Erfindung wird ein somit neuartiges Kontaktdatenverwaltungs- und Anwahlverfahren für Kommunikationssysteme zur Verfügung gestellt, das einem Benutzer des Kommunikationssystems in besonders vorteilhafter Weise eine Vereinfachung des Wählvorgangs bei jedem Anruf eines anderen Teilnehmers ermöglicht, dessen Teilnehmeridentifikationskennung (TN-ID) in der zentralen Kontaktdatenbank des Kommunikationssystems abrufbar gespeichert ist. Mit Hilfe der hier vorgeschlagenen Lösung ist es einem Benutzer des Kommunikationssystems möglich, einen Teilnehmerkontakt auszuwählen und eine Kommunikationsverbindung zu diesem herzustellen, ohne dessen Rufnummer zu kennen. Dadurch kann insbesondere der Wählvorgang wesentlich vereinfacht werden.

Um eine vom Benutzer eingegebene Teilnehmeridentifikationskennung EINGABE-TN-ID von einer regulären Telefonnummer zu unterscheiden, wird der Teilnehmeridentifikationskennung in einer vorteilhaften Ausführungsform eine Initialisierungsziffernfolge, beispielsweise die Ziffernfolge 000 oder die Ziffernfolge 111 vorangestellt. Die Initialisierungsziffernfolge kann länderspezifisch unterschiedlich sein.

Bei der Anwahl eines Teilnehmers gibt der Benutzer - gegebenenfalls nach der manuellen Eingabe der zuvor genannten Initialisierungsziffernfolge - an Stelle der normalen Telefonnummer den kompletten Namen oder um die Eingabe zu vereinfachen, eine Abkürzung des Namens des anzuwählenden Teilnehmers mit Hilfe einer Eingabevorrichtung, beispielsweise mittels einer herkömmlichen Telefontastatur, ein. Bei herkömmlichen Telefontastaturen, wie sie aus dem Stand der Technik bekannt sind, gelten in der Regel folgende Zuordnungen der Ziffern der Telefontastatur zu verschiedenen Buchstaben:
■ 1 - kein Buchstabe
■ 2 - A,B,C
■ 3 - D, E, F
■ 4-G, H, I
■ 5-J, K, L
■ 6 - M, N, O
■ 7 - P, Q, R, S
■ 8 - T, U, V
■ 9 - W, X, Y, Z
■ 0 - kein Buchstabe

Um eine Teilnehmeridentifikationskennung einzugeben, muss der Benutzer, basierend auf der vorstehend aufgeführten Zuordnung der Ziffern zu den einzelnen Buchstaben, eine beliebige Anzahl von Buchstaben des Vornamens und dahinter durch ein Trennzeichen, beispielsweise durch die Ziffer 0, getrennt, eine beliebige Anzahl von Buchstaben des Nachnamens des anzuwählenden Teilnehmers eingeben. Die Eingabe des Benutzers kann, wie bereits erwähnt, insbesondere über die den Buchstaben zugeordneten Zifferntasten der Telefontastatur erfolgen. Dazu wird jede Zifferntaste in einer vorteilhaften Ausführungsform zur Eingabe eines Buchstabens stets nur einmal gedrückt, und zwar unabhängig davon, an welcher Position der Buchstabe auf der Taste steht.

Die Anzahl der Buchstaben des Vor- oder Nachnamens, die von einem Benutzer einzugeben sind, kann beliebig sein. Der entsprechende Namensteil (Vor- oder Nachname) kann zum Beispiel auch vollständig entfallen. Wichtig ist in diesem Zusammenhang allerdings, dass die Buchstaben des Vornamens vor den Buchstaben des Nachnamens eingegeben werden. Darüber hinaus werden in dem Vorbeziehungsweise Nachnamen enthaltene Leer- oder Sonderzeichen vorteilhaft ignoriert. An Stelle der Verwendung von Abkürzungen müssen die Namensbestandteile ausgeschrieben werden. Falls ein Vor- oder Nachname entfällt, muss trotzdem die Trennziffer (beispielsweise die Ziffer 0), und zwar vorangestellt beim Entfall des Vornamens und nachgestellt beim Entfall des Nachnamens eingegeben werden.

Bei der hier vorgeschlagenen Lösung werden die Kontaktdaten der Teilnehmer in der zentralen Kontaktdatenbank, auf die die Teilnehmer des Kommunikationssystems mit ihren Teilnehmereinrichtungen zugreifen können, zur Verfügung gestellt und abrufbar gespeichert. Ein wesentlicher Aspekt des hier vorgestellten Verfahrens besteht insbesondere darin, dass für die Anwahl eines Teilnehmers des Kommunikationssystems nur dessen Name oder in einer besonders bevorzugten Ausführungsform auch nur ein Teil des Namens verwendet wird. Eine Kenntnis der gegebenenfalls teilnehmereinrichtungsspezifischen Rufnummer(n) und/oder eine Speicherung der Kontaktdaten in der Hardware und/oder Software der Teilnehmereinrichtungen ist somit nicht mehr erforderlich, so dass die Anwahl eines Teilnehmers des Kommunikationssystems vereinfacht werden kann.

Die zentrale Kontaktdatenbank des Kommunikationssystems kann von verschiedenen Software-Clients, insbesondere von Softphones, VoIP-Clients und Kontaktdatenverwaltungsprogrammen sowie E-Mail-Programmen sowie darüber hinaus auch von herkömmlichen Festnetztelefonen, Mobiltelefonen (mit oder ohne integrierte VoIP-Software) oder VoIP-Telefonen angesprochen werden, damit eine Datenbankabfrage getätigt und in Abhängigkeit vom Ergebnis dieser Abfrage eine Kommunikationsverbindung zum gewünschten Teilnehmer aufgebaut werden kann.

In einer bevorzugten Ausführungsform wird vorgeschlagen, dass bei mehreren Abfragetreffern eine Sprachmitteilung zur Teilnehmereinrichtung des Benutzers des Kommunikationssystems übertragen wird. Durch diese Sprachmittelung können dem Benutzer eine Auswahl der Abfragetreffer oder aber sämtliche Abfragetreffer zur Verfügung gestellt werden, so dass er zum Beispiel durch eine Tasten- oder Spracheingabe einen der Kontakte auswählen und eine Kommunikationsverbindung zu diesem Kontakt herstellen kann.

Es besteht in einer vorteilhaften Ausführungsform die Möglichkeit, dass bei mehreren Abfragetreffern durch eine Auswahl des Benutzers eine Kommunikationsverbindung zu einer der den Abfragetreffern zugeordneten Teilnehmereinrichtungen des Kommunikationssystems aufgebaut wird.

In einer bevorzugten Ausführungsform kann vorgesehen sein, dass die Teilnehmeridentifikationskennung (TN-ID) eines Teilnehmers aus den ersten drei Buchstaben des Vornamens und den ersten drei Buchstaben des Nachnamens gebildet und in der zentralen Kontaktdatenbank gespeichert wird. Durch diese Maßnahme kann die Eingabe der Teilnehmeridentifikationskennung während des Anwahlprozesses vereinfacht werden.

Es besteht in einer besonders vorteilhaften Ausführungsform die Möglichkeit, dass aus dem Namen oder aus Namenbestandteilen eines Teilnehmers des Kommunikationssystems eine numerische Teilnehmeridentifikationskennung (TN-ID) erzeugt und in der zentralen Kontaktdatenbank gespeichert wird. Diese Erzeugung kann insbesondere auf der oben bereits erläuterten Zuordnung von Ziffern und Buchstaben erfolgen.

Es kann in einer vorteilhaften Ausführungsform vorgesehen sein, dass für die Suche einer Teilnehmeridentifikationskennung (TN-ID) in der zentralen Kontaktdatenbank jeweils ein regulärer Ausdruck für den Vornamen und für den Nachnamen des Teilnehmers gebildet wird.

Um einem Benutzer die Administration der in der zentralen Kontaktdatenbank gespeicherten Kontaktinformationen zu erleichtern, besteht in einer vorteilhaften Ausführungsform die Möglichkeit, dass die in der zentralen Kontaktdatenbank gespeicherten Kontaktdaten der Teilnehmer über eine webbasierte Eingabemaske eingegeben werden.

!n einer besonders vorteilhaften Weiterbildung kann auch vorgesehen sein, dass die Teilnehmereinrichtungen zumindest teilweise automatisch mit der zentralen Kontaktdatenbank synchronisiert werden. Die zentrale Kontaktdatenbank kann zum Beispiel mit Softwareprogrammen, insbesondere mit Kontaktdatenverwaltungsprogrammen oder E-Mail-Programmen, die auf einem Computer, Mobiltelefon, PDA oder dergleichen gespeichert sind, und verschiedenen Teilnehmereinrichtungen synchronisiert werden.

Bei der Synchronisierung wird einem Benutzer vorzugsweise zunächst eine Liste der Daten der entsprechenden, mit der zentralen Kontaktdatenbank zu synchronisierenden Teilnehmereinrichtung angezeigt, aus denen der Teilnehmer die zu synchronisierenden Felder manuell auswählen kann. Dabei kann vorzugsweise auch eingestellt werden, mit welchem Feld der zentralen Kontaktdatenbank synchronisiert wird. Falls die Felder bei der Synchronisierung in der Teilnehmereinrichtung bereits durch Vor- und Nachname getrennt vorliegen, werden diese Felder vorzugsweise direkt in die zentrale Kontaktdatenbank übernommen. Sofern diese Felder nur als eine zusammenhängende Zeichenkette vorliegen, wird dieses Feld vorteilhaft von der Synchronisierungssoftware der zentralen Kontaktdatenbank automatisch in Vor- und Nachname aufgeteilt. In besonders vorteilhafter Weise geschieht dies schon während der Synchronisierung, bevor die Daten in die zentrale Kontaktdatenbank eingetragen und gespeichert werden.

Falls die Kontaktdaten einer Teilnehmereinrichtung zum ersten Mal synchronisiert werden, ist es bevorzugt, wenn die Trennungsvorschläge aller neuen Kontakte, insbesondere in einer Liste, angezeigt werden. Dort können die Vorschläge gegebenenfalls bearbeitet oder komplett übernommen und in der zentralen Kontaktdatenbank gespeichert werden. Während des Imports werden eventuell in den Namenbestandteilen vorhandene Zeichen mit Akzenten oder andere Sonderzeichen in das lateinische Alphabet übersetzt und in die beiden oben genannten Felder, die den Vor- und Nachnamen in der Teilnehmeridentifikationskennungsschreibweise enthalten, eingetragen. Umlaute, Zeichen mit Akzenten oder andere Sonderzeichen werden dabei ohne die jeweiligen Zusätze eingegeben (also zum Beispiel a anstatt ä, oder s anstatt von β). Falls es Sonderzeichen gibt, bei denen die entsprechende Schreibweise nicht auf Anhieb klar ist, kann der Benutzer die Umsetzung in den beiden Feldern, die den Vor- und Nachnamen in der Teilnehmeridentifikationskennungsschreibweise enthalten, nachsehen.

Damit einem Teilnehmer mehrere gegebenenfalls bei ihm vorhandene Teilnehmereinrichtungen, die mit Hilfe des hier vorgestellten Verfahrens anwählbar sind, zugeordnet werden können, wird in einer besonders bevorzugten Ausführungsform vorgeschlagen, jeder der Teilnehmereinrichtungen eines einzelnen Teilnehmers des Kommunikationssystems eine Teilnehmereinrichtungszuordnungsziffer (TE-ID) zugeordnet wird. Die Teilnehmereinrichtungszuordnungsziffer (TE-ID) wird vorzugsweise hinter der Teilnehmeridentifikationskennung eingegeben. Dabei kann zum Beispiel folgende Zuordnung der Teilnehmereinrichtungszuordnungsziffern (TE-ID) zu den entsprechenden Teilnehmereinrichtungen in der zentralen Kontaktdatenbank implementiert sein:
■ 1 VoIP-Telefonnummer (privat)
■ 2 Festnetztelefonnummer (privat 1)
■ 3 Festnetztelefonnummer (privat 1)
■ 4 VoIP-Mobiltelefonnummer (privat)
■ 5 Mobiltelefonnummer (privat)
■ 6 VoIP-Telefonnummer (geschäftlich)
■ 7 Festnetztelefonnummer (geschäftlich 1)
■ 8 Festnetztelefonnummer (geschäftlich 2)
■ 9 VoIP-Mobiltelefonnummer (geschäftlich)
■ 0 Mobiltelefonnummer (geschäftlich)

Durch die Eingabe der Teilnehmeridentifikationskennung und der nachgestellten Teilnehmereinrichtungszuordnungsziffer (TE-ID) kann der Benutzer somit bequem nicht nur einen Kontakt, sondern auch eine spezifische Teilnehmereinrichtung des entsprechenden Kontakts auswählen und eine Anwahl dieser Teilnehmereinrichtung einleiten. Ohne Eingabe der Endziffer (Teilnehmereinrichtungszuordnungsziffer (TE-ID)) werden die anwählbaren Teilnehmereinrichtungen (Telefonnummern) per Sprachansage ausgegeben, so dass der Benutzer eine entsprechende Auswahl treffen kann.

Es besteht in einer bevorzugten Ausführungsform des hier vorgestellten Verfahrens die Möglichkeit, dass neben der Verwendung der Teilnehmeridentifikationskennungen für eine Suche im eigenen Kontaktdatenbestand eines Kommunikationsdiensteanbieters auch eine Suche in nationalen Rufnummernverzeichnisdatenbanken eines oder mehrerer Länder erfolgen kann. In dieser Ausführungsform kann die Eingabe der Teilnehmeridentifikationskennung nach der Eingabe des Nachnamens um die Angabe der Stadt (und gegebenenfalls auch des Landes, sofern ein Zugriff auf Rufnummernverzeichnisdatenbanken verschiedener Länder implementiert ist) erweitert werden. Die Eingabe der Teilnehmereinrichtungszuordnungsziffer (TE-ID) kann in dieser Verfahrensvariante entfallen, da in der nationalen Telefonbuchdatenbank üblicherweise zu jeder Person nur eine einzelne Rufnummer gespeichert ist.

Die Eingabe besteht in dieser Ausführungsform somit aus den Bestandteilen VORNAME 0 NACHNAME 0 STADT. Bei der Suche nach einem Teilnehmer wird in einem ersten Abfrageschritt zunächst versucht, die korrekte Stadt zu ermitteln. Falls bei der Suche mehr als eine Stadt, jedoch weniger als zehn Städte gefunden wurden, sendet das Kommunikationssystem eine entsprechende Sprachnachricht, mittels derer die gesuchte Stadt beim Benutzer erfragt wird (Beispiel: "Es wurden mehrere Ortsnetze gefunden, die zu Ihrer Eingabe passen. Wählen Sie 1 für Bochum, Vorwahl 0234, 2 für Bonn, Vorwahl 0228, ... oder legen Sie auf.). Falls von der Datenbank mehr als zehn Treffer für die Stadt ermittelt werden, so sendet das Kommunikationssystem eine Sprachnachricht zur Teilnehmereinrichtung des Benutzers, die zum Beispiel folgende Form haben kann: "Es wurden mehr als 10 Städte gefunden, die zu Ihrer Eingabe passen. Bitte konkretisieren Sie Ihre Eingabe der Teilnehmeridentifikationskennung.".

Nach der Ermittlung der Stadt werden die der eingegebenen Teilnehmeridentifikationskennung entsprechenden Kontakte in der jeweiligen Stadt in der Datenbank gesucht. Falls von der Datenbank mehr als ein Teilnehmer in der jeweiligen Stadt ermittelt wird, überträgt das Kommunikationssystem eine Sprachnachricht zur Teilnehmereinrichtung des Benutzers und liest die einzelnen, bei der Datenbankabfrage gefundenen Kontakte vor und gibt für jeden Kontakt eine Ziffernfolge an, die vom Benutzer zur Anwahl des entsprechenden Teilnehmers eingegeben werden kann. Falls von der Datenbank mehr als zehn passende Kontakte ermittelt wurden, überträgt das Kommunikationssystem eine Sprachnachricht zur Teilnehmereinrichtung des Benutzers, die zum Beispiel folgende Form haben kann: "Es wurden mehr als zehn Kontakte in dieser Stadt gefunden, die zu Ihrer Eingabe passen. Bitte konkretisieren Sie Ihre Eingabe.".

Nachdem der Kontakt ermittelt wurde, wird abschließend geprüft, ob zu dem Kontakt gegebenenfalls mehrere Rufnummern für unterschiedliche Teilnehmereinrichtungen gespeichert wurden. Falls dies nicht der Fall ist, überträgt das Kommunikationssystem eine Sprachnachricht zur Teilnehmereinrichtung des Benutzers "VORNAME NACHNAME aus STADT wird angewählt". Falls es mehrere Rufnummern (zum Beispiel RUFNUMMER1 und RUFNUMMER 2) zu diesem Kontakt gibt, sendet das Kommunikationssystem die Sprachnachricht "Es wurden mehrere Rufnummern zu diesem Kontakt gefunden. Bitte wählen Sie 1 für RUFNUMMER1 oder 2 für RUFNUMMER 2 oder legen Sie auf.".

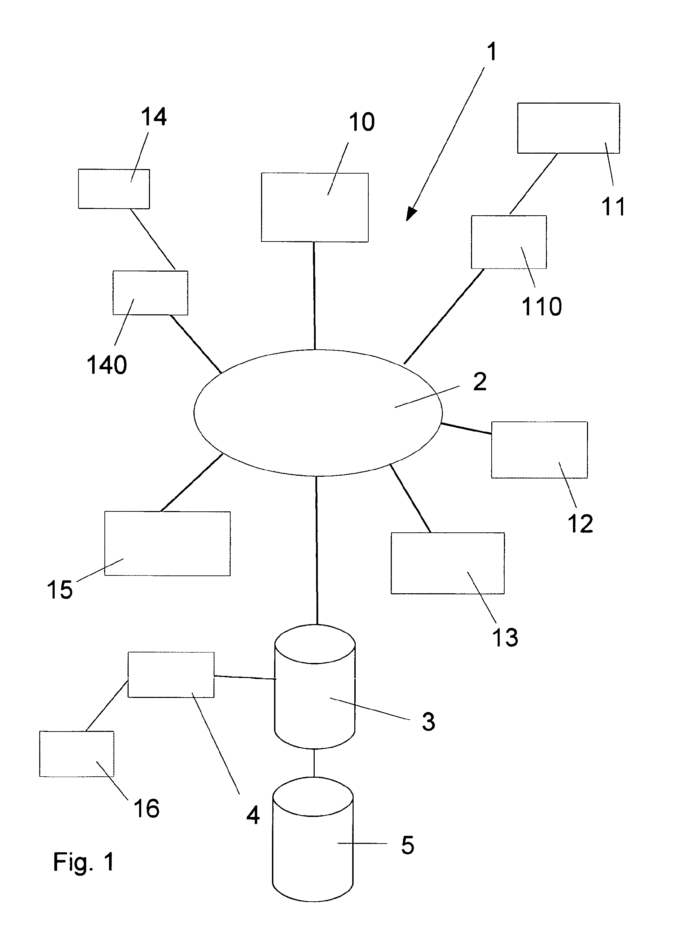

Weitere Merkmale und Vorteile der vorliegenden Erfindung werden deutlich anhand der nachfolgenden Beschreibung bevorzugter Ausführungsbeispiele unter Bezugnahme auf die beiliegende Fig. 1, die eine schematische Darstellung eines Kommunikationssystems 1, das zur Durchführung eines erfindungsgemäßen Verfahrens zum Aufbau einer Kommunikationsverbindung zwischen Teilnehmern eines Kommunikationsnetzes 2 geeignet ist, zeigt. Das Kommunikationssystem 1 umfasst mindestens ein Kommunikationsnetz 2, das in der Darstellung in Fig. 1 das Internet ist.

Das Kommunikationssystem 1 umfasst eine Vielzahl von Teilnehmereinrichtungen 10 - 16, die zumindest teilweise über IP-Verbindungen (IP = Internetprotokoll) miteinander kommunizieren können. Man erkennt in Fig. 1 zum Beispiel einen Computer 10, ein Telefon 11 mit einem ADSL-Router 110, ein Mobiltelefon 12, ein drahtloses VoIP-Telefon 13 sowie ein drahtgebundenes VoIP-Telefon 15. Ferner ist ein herkömmliches Telefon 14 dargestellt, dem eine ATA-Box 140 (ATA: Analog-Telefon-Adapter) vorgeschaltet ist, welche Sprachsignale in IP-Pakete umwandeln kann. Alle vorstehend genannten Geräte sind internetfähig ausgebildet. Ferner ist ein herkömmliches Festnetztelefon 16 zu erkennen, dessen Einbindung in die übrige Kommunikationssysteminfrastruktur weiter unten erläutert wird.

Im Kommunikationsnetz 2 sind so genannte Voice over IP-Dienste (VoIP-Dienste) implementiert, um internetbasierte Sprachverbindungen zwischen Teilnehmern des Kommunikationsnetzes 1 aufbauen zu können.

Der Aufbau von Kommunikationsverbindungen zwischen den Teilnehmereinrichtungen 10 - 16 über das Kommunikationsnetz 2 erfolgt mit Hilfe des Session Initiation Protocols (SIP). Das Kommunikationssystem 1 weist dazu eine VoIP-Servereinrichtung 3 auf, der eine zentrale Kontaktdatenbank 5 zugeordnet ist, in der Kommunikationsdaten von Teilnehmern des Kommunikationssystems 1 gespeichert und verwaltet werden können. Zu den Daten, die in der zentralen Kontaktdatenbank 5 abrufbar gespeichert sind, zählen Namensinformationen zumindest einiger der Teilnehmer des Kommunikationssystems 1 sowie eine Anzahl von Rufnummern, unter denen eine bestimmte Teilnehmereinrichtung 10 - 16 eines Teilnehmers des Kommunikationssystems erreichbar ist. Die Anbindung des Festnetztelefons 16 erfolgt mittels eines Media-Gateways 4, das der VoIP-Servereinrichtung 3 zugeordnet ist.

Die zentrale Kontaktdatenbank 5, die mit der VoIP-Servereinrichtung 3 in Kommunikationsverbindung steht, enthält Kontaktinformationen für alle möglichen aktuellen und auch zukünftigen Teilnehmereinrichtungen (Clients) 10 - 16 der Teilnehmer. Der Zugriff auf die zentrale Kontaktdatenbank 5 zur Herstellung einer Kommunikationsverbindung mit mindestens einem weiteren Teilnehmer des Kommunikationssystems 1 kann mit Hilfe der Teilnehmereinrichtungen 10 - 16 erfolgen. Ferner ist die zentrale Kontaktdatenbank 5 vorzugsweise mit unterschiedlichen Software-Anwendungen (zum Beispiel E-Mail-Clients mit integrierter Adressbuchfunktion) und Teilnehmereinrichtungen 10 - 16, die eine integrierte Kontaktdatenverwaltung aufweisen, - vorzugsweise zumindest teilweise automatisch - synchronisierbar.

In der zentralen Kontaktdatenbank 5 des Kommunikationssystems 1 können zum Beispiel folgende kontaktbezogene Daten der Teilnehmer gespeichert werden:
■ Anrede/Titel,
■ Vorname,
■ Nachname,
■ Nutzername,
■ Geburtstag,
■ Privatadresse (Straße, Postleitzahl, Ort, Bundesland, Land),
■ Geschäftsadresse (Straße, Postleitzahl, Ort, Bundesland, Land),
■ Weitere Adresse (Straße, Postleitzahl, Ort, Bundesland, Land),
■ Email-Adresse (privat),
■ Email-Adresse (geschäftlich),
■ Email-Adresse (weitere),
■ Website (privat),
■ Website (geschäftlich),
■ IM-Adresse,
■ Telefonnummer (privat 1),
■ Telefonnummer (privat 2),
■ Telefonnummer (VoIP-Provider, privat),
■ Faxnummer (privat),
■ Mobiltelefonnummer (privat 1),
■ Mobiltelefonnummer (privat 2),
■ Telefonnummer (geschäftlich 1),
■ Telefonnummer (geschäftlich 2),
■ Telefonnummer (VoIP-Provider, geschäftlich),
■ Faxnummer (geschäftlich),
■ Mobiltelefonnummer (Geschäftlich1),
■ Mobiltelefonnummer (Geschäftlich2),
■ Notizen,
■ Gruppe.

Jeder Teilnehmer des Kommunikationssystems 1 kann auf die zentrale Kontaktdatenbank 5 zugreifen und bei der Einrichtung seines persönlichen Kontaktprofils entsprechende Namensinformationen und Rufnummerninformationen übertragen und in der zentralen Kontaktdatenbank 5 speichern.

Beim Anlegen einer Kontaktinformation in der zentralen Kontaktdatenbank 5 wird aus dem Namen des Teilnehmers eine nutzerspezifische Teilnehmeridentifikationskennung (TN-ID), die vorzugsweise eine numerische Ziffernfolge ist, erzeugt und in der zentralen Kontaktdatenbank 5 hinterlegt. Jedem Nutzer des Kommunikationssystems 1 kann somit eine Teilnehmeridentifikationskennung (TN-ID) zugeordnet werden. Die Umwandlung der Buchstaben des Vor- und Nachnamens eines Benutzers kann zum Beispiel nach folgendem Schema erfolgen:
■ A,B,C - 2
■ D, E, F - 3
■ G, H, I - 4
■ J, K, L - 5
■ M, N, O - 6
■ P, Q, R, S - 7
■ T, U, V - 8
■ W, X, Y, Z - 9

Diese Zuordnung entspricht der üblichen Zuordnung von Ziffern zu Buchstaben bei einer herkömmlichen Telefontastatur.

Die hier vorgeschlagene Lösung ermöglicht es einem Benutzer, bei einem Zugriff auf die zentrale Kontaktdatenbank 5 einen Teilnehmer auszuwählen und eine Kommunikationsverbindung zu diesem ausgewählten Teilnehmer herzustellen, ohne dessen Rufnummer zu kennen. Um die Teilnehmeridentifikationskennung TN-ID von einer regulären Telefonnummer zu unterscheiden, wird die Teilnehmeridentifikationskennung mit einer spezifischen Initialisierungsziffernfolge eingeleitet. Beispielsweise kann dies die Ziffernfolge 000 oder die Ziffernfolge 111 sein. Bei der Eingabe einer Rufnummer als Teilnehmeridentifikationskennung gibt der Benutzer also nach der Initialisierungsziffernfolge an Stelle der normalen Telefonnummer entweder den kompletten Namen (Vor- und Nachnamen des Teilnehmers) oder eine Abkürzung des Namens des Teilnehmers über eine geeignete Eingabevorrichtung seiner Teilnehmereinrichtung 10 - 16 ein.

Herkömmliche Festnetz- oder Mobiltelefone, die als Teilnehmereinrichtung dienen können, weisen in der Regel lediglich ein numerisches Tastenfeld auf, mittels dessen eine Benutzereingabe getätigt werden kann. Bei einer herkömmlichen Telefontastatur können zum Beispiel folgende Zuordnungen von Zahlen zu Buchstaben gelten:
■ 1 - kein Buchstabe
■ 2 - A,B,C
■ 3 - D, E, F
■ 4 - G, H, I
■ 5-J, K, L
■ 6 - M, N, O
■ 7 - P, Q, R, S
■ 8-T, U, V
■ 9 - W, X, Y, Z
■ 0 - kein Buchstabe

Einzelnen Zifferntasten der Telefontastatur können somit entweder kein Buchstabe oder aber drei beziehungsweise vier Buchstaben zugeordnet sein.

Um eine Teilnehmeridentifikationskennung mit einer herkömmlichen Telefontastatur einzugeben, muss der Benutzer, basierend auf der vorstehend aufgeführten Zuordnung, eine beliebige Anzahl von Buchstaben des Vornamens und dahinter durch die Eingabe eines Trennzeichens, beispielsweise der Ziffer 0, getrennt, eine beliebige Anzahl der Buchstaben des Nachnamens eingeben. Dazu wird gemäß einer ersten Variante jede Zifferntaste stets nur einmal gedrückt, egal an welcher Position der Buchstabe auf der Taste steht. Gemäß einer zweiten Variante können die Zifferntasten der Eingabevorrichtung auch mehrmals gedrückt werden, um eine Eingabe zu tätigen. Beispielsweise kann gemäß der oben aufgeführten Zuordnung durch einmaliges Drücken der Taste "2" eine Buchstabeninformation für den Buchstaben "a" erzeugt werden. Durch zweimaliges Drücken der Taste "2" wird eine Buchstabeninformation für den Buchstaben "b" erzeugt. Analog wird durch dreimaliges Drücken der Taste "2" eine Buchstabeninformation für den Buchstaben "c" erzeugt. Entsprechendes gilt auch für die übrigen Tasten "3" bis "9". Das bedeutet mit anderen Worten, dass durch mehrfaches Drücken der Zifferntasten "2" bis "9" der Eingabevorrichtung Ziffernfolgen erzeugt werden können, die eindeutig einem Buchstaben des Alphabets zugeordnet werden können.

Gibt ein Teilnehmer beispielsweise über ein numerisches Tastenfeld die Ziffernfolge 6444222077722244X (MIC0SCHX) ein, wobei X=0...9 ein numerischer Platzhalter für die entsprechende Teilnehmereinrichtung 10 - 16 eines Teilnehmers ist und 0 das Trennzeichen zwischen dem Vornamen und dem Nachnamen ist, kann durch eine Abfrage der zentralen Kontaktdatenbank 5 über die VoIP-Servereinrichtung 3 zum Beispiel eine Kommunikationsverbindung zu einem Teilnehmer mit dem Namen "Michael Schmidt" hergestellt werden.

Die Anzahl der Buchstaben des Vor- oder Nachnamens des gewünschten Teilnehmers ist bei der Eingabe beliebig; der entsprechende Namensteil kann bei der Eingabe gegebenenfalls auch komplett entfallen. Wichtig ist allerdings, dass die Buchstaben des Vornamens vor den Buchstaben des Nachnamens eingegeben werden. Darüber hinaus werden in dem Vor- beziehungsweise Nachnamen enthaltene Leer- oder Sonderzeichen ignoriert. Anstelle der Verwendung von Abkürzungen müssen die Namensbestandteile ausgeschrieben werden. Falls der Vor- oder Nachname bei der Eingabe entfällt, muss trotzdem die Trennziffer 0 angegeben werden.

Beispiele:
■ 6420872 (MIC URB): Kombination aus Vor- und Nachname
■ 6420 (MIC): nur Vorname
■ 0872 (URB): nur Nachname

Umlaute, Zeichen mit Akzenten oder andere Sonderzeichen werden dabei ohne die jeweiligen Zusätze eingegeben (also zum Beispiel a an Stelle von ä, oder s an Stelle von β). Falls es Sonderzeichen gibt, bei denen die entsprechende Schreibweise nicht auf Anhieb klar ist, kann der Nutzer die Umsetzung in den beiden Feldern, die den Vor- und Nachnamen in Teilnehmeridentifikationskennungsschreibweise enthalten, nachsehen.

Vorzugsweise hinter der Teilnehmeridentifikationskennung wird über eine weitere Ziffer beziehungsweise Ziffernkombination angegeben, welche Rufnummer und damit welche Teilnehmereinrichtung 10 - 16 des der Teilnehmeridentifikationskennung TN-ID entsprechenden Kontakts angewählt werden soll. Der vorstehend genannte Platzhalter "X" kann einen der Werte zwischen 0 und 9 einnehmen, so dass jedem Teilnehmer bei dem in diesem Ausführungsbeispiel gewählten Nummernsystem insgesamt zehn Rufnummern für unterschiedliche Teilnehmereinrichtungen 10 - 16 zugeordnet werden können. Dabei kann zum Beispiel folgende Zuordnung implementiert sein:
■ 1 VoIP-Telefonnummer (privat)
■ 2 Festnetztelefonnummer (privat 1)
■ 3 Festnetztelefonnummer (privat 1)
■ 4 VoIP-Mobiltelefonnummer (privat)
■ 5 Mobiltelefonnummer (privat)
■ 6 VoIP-Telefonnummer (geschäftlich)
■ 7 Festnetztelefonnummer (geschäftlich1)
■ 8 Festnetztelefonnummer (geschäftlich2)
■ 9 VoIP-Mobiltelefonnummer (geschäftlich)
■ 0 Mobiltelefonnummer (geschäftlich)

Die numerische Eingabe einer Teilnehmeridentifikationskennung kann von der VolP-Servereinrichtung 3 des Kommunikationssystems 1 durch eine Abfrage der zentralen Kontaktdatenbank 5 verarbeitet werden. Liefert die Datenbankabfrage einen entsprechenden Treffer, so wird von der VoIP-Servereinrichtung 3 eine Kommunikationsverbindung zum Teilnehmer mit der gewünschten Rufnummer und der gewünschten Teilnehmereinrichtung hergestellt.

Die von einem Benutzer zu tätigen Eingaben sollen nachfolgend anhand eines Beispiels (Anruf des Kontakts namens Michael Urban) erläutert werden:
Beispiele möglicher Eingaben sind:
   ■ 64208721 (MIC URB - VolP privat),
   ■ 60872268 (M URBAN - VolP - mobil, geschäftlich),
   ■ 08722686 (URBAN - VoIP - geschäftlich),
   ■ 64242305 (MICHAEL - mobil Privat),

Um die Rufnummernklassifizierung zu erkennen, wird bei dem hier beschriebenen Verfahren somit stets die letzte Stelle verwendet. Dabei ist zu beachten, dass dann, wenn es sich bei der Abfrage um eine Suche in einem nationalen Rufnummernverzeichnis handelt, keine Ziffer zur Identifizierung einer bestimmten Rufnummernklassifizierung angegeben wird.

Es besteht die Möglichkeit, dass die genaue Schreibweise des Namens einer Kontaktperson einem Benutzer nicht bekannt ist. Daher kann vorgesehen sein, dass an der unbekannten Stelle / den unbekannten Stellen zum Beispiel die Ziffer 1 als Platzhalter verwendet wird. Mit anderen Worten wird dadurch ausgedrückt, dass an der entsprechenden Stelle ein beliebiger Buchstabe stehen kann.

Der Ausdruck 612 entspricht dabei zum Beispiel den Zeichenfolgen MAC, MBC, MCC, MDC, MEC, ..., MYC, MZC.

Sollte eine Abfrage der zentralen Kontaktdatenbank 5 ergeben, dass eine derartige Ziffernfolge als Teilnehmeridentifikationskennung mehrfach vorhanden ist, kann vorzugsweise über ein Spracheingabe oder durch das Drücken einer Taste ausgewählt werden, welcher der Teilnehmer angewählt werden soll.

Die Eingabe des Namens beziehungsweise der Abkürzung des Namens kann nach dem vorstehend beschriebenen Prinzip alternativ auch mittels einer alphanumerischen Eingabevorrichtung erfolgen, sofern die Teilnehmereinrichtung 10 - 16 des Benutzers über eine entsprechende Eingabevorrichtung verfügt. Um eine Teilnehmeridentifikationskennung mit einer herkömmlichen alphanumerischen Eingabevorrichtung einzugeben, muss der Benutzer eine beliebige Anzahl von Buchstaben des Vornamens und dahinter durch die Eingabe eines Trennzeichens, beispielsweise der Ziffer 0, getrennt, eine beliebige Anzahl der Buchstaben des Nachnamens eingeben. Die Benutzereingaben werden dann der oben beschriebenen Zuordnung entsprechend in Ziffern umgewandelt, zur zentralen Kontaktdatenbank 5 übermittelt und dort mit den gespeicherten Teilnehmeridentifikationskennungen vergleichen.

Die Nutzung des Kommunikationssystems 1 kann über unterschiedliche Teilnehmereinrichtungen 10 - 16 erfolgen. Als Teilnehmereinrichtung kann beispielsweise ein herkömmlicher Computer 10 dienen, auf dem eine Softphone-Computerprogrammanwendung gespeichert ist. Ferner können auf dem Computer 10 Adressverwaltungsprogramme und/oder E-Mail-Programme ausführbar gespeichert sein, die mit der zentralen Kontaktdatenbank 5 vorzugsweise automatisch synchronisiert werden können. Ferner kann der Zugriff auf die zentrale Kontaktdatenbank 5 des Kommunikationssystems 1 auch über herkömmliche Festnetztelefone 16, Mobiltelefone 12 oder VoIP-Telefone 13, 15 erfolgen.

Wenn ein Teilnehmer zum Beispiel mittels einer Tastatur einer Teilnehmereinrichtung 10 - 16 eine Teilnehmeridentifikationskennung EINGABE-TE-ID eingibt, wird diese auf die VoIP-Servereinrichtung 3 übertragen. Anschließend wird die eingegebene Teilnehmeridentifikationskennung EINGABE-TE-ID durch eine Datenbankabfrage mit den in der zentralen Kontaktdatenbank 5 hinterlegten Teilnehmeridentifikationskennungen TE-ID verglichen. Entspricht die eingegebene Teilnehmeridentifikationskennung EINGABE-TE-ID einer in der zentralen Kontaktdatenbank 5 gespeicherten Teilnehmeridentifikationskennungen TE-ID, wird über die VoIP-Servereinrichtung 3 eine Kommunikationsverbindung zwischen der Teilnehmereinrichtung des Benutzers und einer weiteren Teilnehmereinrichtung 10 - 16 eines anderen Teilnehmers des Kommunikationssystems 1 hergestellt. Um bei der Datenbankabfrage einen Kontakt in der zentralen Kontaktdatenbank 5 zu suchen, wird jeweils ein regulärer Ausdruck für den Vor- und für den Nachnamen gebildet. Der reguläre Ausdruck enthält die folgenden Bestandteile:
■ 1 : (A|B|C|D|E|F|G|H|I|J|K|L|M|N|O|P|Q|R|S|T|U|V|W|X|Y|Z)
■ 2 : (A|B|C)
■ 3 : (D|E|F)
■ 4 : (G|H|I)
■ 5 : (J|K|L)
■ 6 : (M|N|O)
■ 7 : (P|Q|R|S)
■ 8 : (T|U|V)
■ 9 : (W|X|Y|Z)
■ 0 : -

Um nach 64208721 (MIC URB privat 1) zu suchen, wird somit folgender reguläre Ausdruck gebildet:

| Vorname: | | | | Nachname: | |
|---|---|---|---|---|---|
| 6 | 4 | 2 | 8 | 7 | 2 |
| (M\|N\|O)(G\|H\|I)(A\|B\|C) .* und (T\|U\|V)(P\|Q\|R\|S)(A\|B\|C) .* | | | | | |

Folgende Reaktionen des Kommunikationssystems 1 können in Abhängigkeit der Rückgabe der zentralen Kontaktdatenbank 5 erfolgen:

### a) keine Rückgabe

Das Kommunikationssystem 1 sendet an die Teilnehmereinrichtung 10 - 16 des Benutzers eine Sprachnachricht, wie zum Beispiel "Kein Kontakt gefunden.".

### b) genau eine Rückgabe

Das Kommunikationssystem 1 sendet an die Teilnehmereinrichtung 10 - 16 des Benutzers eine Sprachnachricht, wie zum Beispiel "VORNAME NACHNAME NUMMERNZUORDNUNG wird angewählt" und beginnt mit dem Aufbau der Kommunikationsverbindung mit der entsprechenden Teilnehmereinrichtung 10 - 16.

### c) mehrere Rückgaben

Wenn die Kombination aus Vor- und Nachname auf mehrere Teilnehmer des Kommunikationssystems 1 passt, kann zum Beispiel eine Sprachansage ausgegeben werden, die dem Kunden die Möglichkeit eröffnet, zum Beispiel per Tastendruck oder Spracheingabe einen der aufgefundenen Teilnehmer auszuwählen, um eine Kommunikationsverbindung mit einer seiner Teilnehmereinrichtungen 10 - 16 aufzubauen. In diesem Fall sendet das Kommunikationssystem 1 eine Sprachnachricht und gibt die einzelnen Kontakte aus und gibt für jeden Kontakt eine Ziffernfolge an, die zur Anwahl eingegeben oder per Spracheingabe ausgewählt werden muss. Beispiel für die Kontaktnummer 730681 (PE MU VoIP-Privat): "Drücken Sie 1, um Peter Mustermann VoIP-Privat oder 2, um Peer Müller VoIP-Privat anzuwählen oder legen Sie auf". Nach einer entsprechenden Auswahl wird eine Kommunikationsverbindung zum gewünschten Teilnehmer hergestellt.

Falls von der zentralen Kontaktdatenbank 5 beispielsweise mehr als zehn Treffer ermittelt werden, so sendet das Kommunikationssystem 1 die Sprachnachricht an die entsprechende Teilnehmereinrichtung 10 - 16 des Benutzers: "Es wurden mehr als 10 Kontakte gefunden. Bitte konkretisieren Sie Ihre Eingabe".

Die Teilnehmeridentifikationskennung kann auch eingesetzt werden, wenn der Benutzer ein herkömmliches Telefon oder Mobiltelefon nutzen möchte und einen einer Teilnehmeridentifikationskennung entsprechenden Kontakt anwählen möchte. Dabei wird die Rufnummer des einwählenden Benutzers an die VoIP-Servereinrichtung 3 übermittelt, der diese Rufnummernanfrage an die zentrale Kontaktdatenbank 5 weiterleitet. Dabei wird eine Rufnummernerkennung beziehungsweise Teilnehmererkennung durchgeführt, um festzustellen, ob es sich bei der empfangenen Eingabe um eine in der zentralen Kontaktdatenbank 5 gespeicherte Rufnummer handelt. Wenn dies der Fall ist, wird die Rufnummer dem Teilnehmerzugang zugeordnet. Nach Eingabe einer kundenspezifischen Geheimnummer stellt der VoIP-Servereinrichtung 3 dem Kunden eine Sprachansage mit der Aufforderung zur Verfügung, die ersten drei Buchstaben des Vornamens und des Nachnamens des gewünschten Teilnehmers einzugeben, um eine Kommunikationsverbindung aufzubauen.

## Patentansprüche

1. Verfahren zur Herstellung einer Kommunikationsverbindung zwischen Teilnehmern eines Kommunikationssystems (1) mit einer Vielzahl von Teilnehmereinrichtungen (10 - 16), mindestens einem Kommunikationsnetz (2), mittels dessen eine Kommunikationsverbindung zwischen mindestens zwei Teilnehmereinrichtungen (10 - 16) hergestellt wird, und mindestens einer zentralen Kontaktdatenbank (5), in der kontaktbezogene Daten der Teilnehmer abrufbar gespeichert sind, **dadurch gekennzeichnet, dass**
- zumindest für einige Teilnehmer des Kommunikationssystems (1) aus deren Namen eine Teilnehmeridentifikationskennung (TN-ID) erzeugt und in der zentralen Kontaktdatenbank (5) gespeichert wird,
- zum Aufbau einer Kommunikationsverbindung von einem Benutzer eine Teilnehmeridentifikationskennung (EINGABE-TN-ID) eines Kommunikationspartners in die Teilnehmereinrichtung (10 - 16) eingegeben und von der Teilnehmereinrichtung (10 - 16) zur zentralen Kontaktdatenbank (5) übertragen wird,
- durch eine Abfrage der zentralen Kontaktdatenbank (5) überprüft wird, ob die vom Benutzer eingegebene und zur zentralen Kontaktdatenbank (5) übertragene Teilnehmeridentifikationskennung (EINGABE-TN-ID) mindestens einer der in der zentralen Kontaktdatenbank (5) gespeicherten Teilnehmeridentifikationskennungen (TN-ID) entspricht, wobei bei einem einzigen Abfragetreffer eine Kommunikationsverbindung zu einer Teilnehmereinrichtung (10 - 16) des entsprechenden Teilnehmers des Kommunikationssystems (1) aufgebaut wird, bei mehreren Abfragetreffern zumindest einige der den Abfragetreffern zugeordneten und in der zentralen Kontaktdatenbank (5) gespeicherten Kontaktinformationen für eine Auswahl zur Teilnehmereinrichtung (10 - 16) des Benutzers übertragen werden und bei keinem Abfragetreffer eine entsprechende Mitteilung zur Teilnehmereinrichtung (10 - 16) des Benutzers übertragen wird, dass die Abfrage der zentralen Kontaktdatenbank (5) erfolglos war.

2. Verfahren nach Anspruch 1, **dadurch gekennzeichnet, dass** der Teilnehmeridentifikationskennung (EINGABE-TN-ID) eine Initialisierungsziffernfolge vorangestellt wird,

3. Verfahren nach Anspruch 1 oder 2, **dadurch gekennzeichnet, dass** bei mehreren Abfragetreffern eine Sprachmitteilung zur Teilnehmereinrichtung (10 - 16) des Benutzers des Kommunikationssystems (1) übertragen wird.

4. Verfahren nach einem der Ansprüche 1 bis 3, **dadurch gekennzeichnet, dass** bei mehreren Abfragetreffern durch eine Auswahl des Benutzers eine Kommunikationsverbindung zu einer der den Abfragetreffern zugeordneten Teilnehmereinrichtungen (10 - 16) aufgebaut wird.

5. Verfahren nach einem der Ansprüche 1 bis 4, **dadurch gekennzeichnet, dass** die Teilnehmeridentifikationskennung (TN-ID) eines Teilnehmers aus den ersten drei Buchstaben des Vornamens und den ersten drei Buchstaben des Nachnamens erzeugt und in der zentralen Kontaktdatenbank (5) gespeichert wird.

6. Verfahren nach einem der Ansprüche 1 bis 5, **dadurch gekennzeichnet, dass** aus dem Namen oder aus Namenbestandteilen eines Teilnehmers des Kommunikationssystems (1) eine numerische Teilnehmeridentifikationskennung (TN-ID) erzeugt und in der zentralen Kontaktdatenbank (5) gespeichert wird.

7. Verfahren nach einem der Ansprüche 1 bis 6, **dadurch gekennzeichnet, dass** für die Suche einer Teilnehmeridentifikationskennung in der zentralen Kontaktdatenbank (5) jeweils ein regulärer Ausdruck für den Vornamen und für den Nachnamen des Teilnehmers gebildet wird.

8. Verfahren nach einem der Ansprüche 1 bis 7, **dadurch gekennzeichnet, dass** die in der zentralen Kontaktdatenbank (5) gespeicherten Kontaktdaten der Teilnehmer über eine webbasierte Eingabemaske eingegeben werden.

9. Verfahren nach einem der Ansprüche 1 bis 8, **dadurch gekennzeichnet, dass** die Teilnehmereinrichtungen (10 - 16) zumindest teilweise automatisch mit der zentralen Kontaktdatenbank (5) synchronisiert werden.

10. Verfahren nach einem der Ansprüche 1 bis 9, **dadurch gekennzeichnet, dass** jeder der Teilnehmereinrichtungen (10 - 16) eines einzelnen Teilnehmers des Kommunikationssystems (1) eine Teilnehmereinrichtungszuordnungsziffer (TE-ID) zugeordnet wird.

11. Computerprogrammprodukt, das computerausführbare Programmcodemittel zum Ausführen eines Verfahrens nach einem der Ansprüche 1 bis 10 aufweist.

12. Speichermedium, auf dem ein Computerprogrammprodukt nach Anspruch 11 gespeichert ist.
